# FASCICULE DE BREVET EUROPEEN

(11) **EP 4 505 581 B1**
(45) Date de publication et mention de la délivrance du brevet: **17.12.2025**
(21) Numéro de dépôt: 23719814.8
(22) Date de dépôt: 29.03.2023
(51) Int. Cl.: H02K 1/276, H02K 1/32, H02K 7/00

(54) **ROTOR POUR MOTEUR ELECTRIQUE MUNI D'UN CIRCUIT DE REFROIDISSEMENT**
ROTOR FÜR EINEN ELEKTROMOTOR MIT KÜHLKREISLAUF
ROTOR FOR AN ELECTRIC MOTOR PROVIDED WITH A COOLING CIRCUIT

(30) Priorité: 07.04.2022 FR 2203195
(43) Date de publication de la demande: 12.02.2025
(73) Titulaire: NOVARES France, 78140 Vélizy-Villacoublay (FR)
(72) Inventeur: KMIEC, Eric, 62150 FRESNICOURT LE DOLMEN (FR); DARGERE, Nicolas, 59700 MARCQ EN BAROEUL (FR); LEDIEU, Cédric, 62144 MONT SAINT ELOI (FR)
(74) Mandataire: Germain Maureau
(86) Numéro de dépôt international: PCT/FR2023/050452
(87) Numéro de publication internationale: WO 2023/194675

(56) Documents cités:
- EP-A2- 2 254 221
- EP-B1- 3 661 022
- CN-A- 110 784 037
- DE-A1- 102011 121 042
- DE-A1- 102017 009 713
- DE-A1- 102018 222 634
- DE-A1- 102019 133 532
- GB-A- 2 562 760
- JP-A- 2014 093 816
- US-A1- 2010 289 386
- US-A1- 2019 181 709
- US-A1- 2020 028 395
- US-A1- 2020 036 248
- US-A1- 2020 036 249
- US-A1- 2020 244 123
- US-A1- 2020 244 124
- US-A1- 2021 351 664
- US-A1- 2022 294 294
- US-B2- 10 116 178
- US-B2- 11 456 639
- US-B2- 8 080 908

## Description

L'invention concerne un rotor pour moteur électrique agencé pour permettre une meilleure évacuation de la chaleur générée lors de son fonctionnement. L'invention concerne également un moteur électrique comprenant un tel rotor.

De manière générale, les moteurs électriques actuels comportent un rotor solidaire d'un arbre et un stator qui entoure le rotor. Le stator est monté dans un carter qui comporte des roulements pour le montage en rotation de l'arbre. Le rotor comporte un corps formé par un empilage de tôles ou roues polaires (claw pole) maintenues sous forme de paquet au moyen d'un système de fixation adapté. Le corps du rotor comporte des cavités internes logeant des aimants permanents. Le stator comporte un corps constitué par un empilage de tôles formant une couronne, dont la face intérieure est pourvue de dents délimitant deux à deux une pluralité d'encoches ouvertes vers l'intérieur du corps de stator et destinées à recevoir des enroulements de phase. Ces enroulements de phase traversent les encoches du corps de stator et forment des chignons faisant saillie de part et d'autre du corps de stator. Les enroulements de phase peuvent par exemple être constitués d'une pluralité de segments de conducteur en forme de U, les extrémités libres de deux segments adjacents étant reliées entre elles par soudage.

Dans le rotor, le paquet de tôles est enserré axialement entre un flasque avant et un flasque arrière montés coaxialement à l'arbre. Chaque flasque a globalement la forme d'un disque s'étendant dans un plan radial perpendiculaire à l'axe de l'arbre. Chaque flasque comporte un orifice central pour le montage coaxial sur l'arbre et plusieurs trous traversants destinés à recevoir des vis de fixation traversant axialement l'ensemble du paquet de tôles, lesdites vis étant solidarisées aux flasques au moyen d'écrous. Les flasques avant et arrière sont généralement formés d'un matériau amagnétique, conducteur de chaleur, par exemple un métal.

Le carter comporte généralement des paliers avant et arrière assemblés ensemble. Les paliers définissent une cavité interne dans laquelle sont logés le rotor et le stator. Chacun des paliers porte centralement un roulement à bille pour le montage en rotation de l'arbre du rotor.

Lors du fonctionnement du moteur, le flux magnétique induit circulant à travers le rotor génère une chaleur importante qui doit être évacuée. Pour refroidir le moteur, il existe actuellement plusieurs solutions. L'une de ces solutions, décrite dans la demande de brevet français FR 3 111 025, consiste à faire circuler un fluide de refroidissement au travers de cavités traversantes formées à l'intérieur du paquet de tôles, ces cavités traversantes s'étendant selon la direction axiale du rotor. Cette solution est particulièrement adaptée aux rotors munis d'aimants permanents à base de terre rare disposés à la périphérie externe du paquet de tôles. Cette position en périphérie externe des aimants permanents offre en effet suffisamment d'espace à l'intérieur du paquet de tôles pour la formation des cavités traversantes. Cette solution n'est en revanche pas adaptée à des rotors munis d'aimants permanents à base de ferrite, qui, du fait de leur volume important, laissent peu d'espace disponible pour former des cavités traversantes à l'intérieur du paquet de tôles.

En outre, les documents US 2020/036248 A1 et US 2019/181709 A1 divulguent des rotors de l'état de la technique.

L'invention vise donc à proposer un rotor et un moteur électrique comprenant un tel rotor agencé pour permettre une meilleure évacuation de la chaleur générée lors de son fonctionnement et ne présentant pas les inconvénients des solutions existantes décrites précédemment.

A cet effet, l'invention concerne un rotor pour moteur électrique comprenant :
- un arbre de rotor monté rotatif autour d'un axe ;
- un paquet de tôles monté coaxialement sur l'arbre de rotor, ledit paquet de tôles comprenant des cavités internes symétriques par rapport à l'axe de l'arbre et entre elles, lesdites cavités internes traversant axialement l'intégralité du paquet de tôles de telle sorte qu'elles débouchent, à l'une de leurs extrémités, au niveau d'une face latérale avant dudit paquet de tôles et, à une autre de leurs extrémités, au niveau d'une face latérale arrière dudit paquet de tôles ;
- une pluralité d'aimants permanents logés à l'intérieur des cavités internes du paquet de tôles ;
- un flasque avant et un flasque arrière montés coaxialement sur l'arbre de rotor et agencés axialement de part et d'autre du paquet de tôles de telle sorte à être contigus respectivement aux faces latérales avant et arrière du paquet de tôles ;

dans lequel l'arbre est muni d'au moins un premier canal interne de circulation d'un fluide de refroidissement, dit canal d'entrée, et d'au moins un deuxième canal interne de circulation d'un fluide de refroidissement, dit canal de sortie, et dans lequel le flasque avant, respectivement le flasque arrière, est configuré pour former avec la face latérale avant, respectivement la face latérale arrière, du paquet de tôles au moins un canal de liaison avant, respectivement au moins un canal de liaison arrière, à l'intérieur duquel peut circuler un fluide de refroidissement, ledit au moins un canal de liaison avant, respectivement arrière, étant en communication fluidique avec l'un desdits canaux d'entrée et de sortie, et
dans lequel chaque aimant permanent est muni d'au moins un canal longitudinal de circulation de fluide débouchant, d'un côté, sur ledit au moins un canal de liaison avant, et, de l'autre côté, sur ledit au moins un canal de liaison arrière, ledit au moins un canal longitudinal de circulation de fluide étant configuré pour permettre la circulation d'un fluide de refroidissement, et
dans lequel chaque aimant permanent est formé par l'assemblage d'au moins deux parties, respectivement au moins une partie externe et au moins une partie interne, ladite au moins une partie interne étant logée à l'intérieur de ladite au moins une partie externe, et ledit au moins un canal longitudinal de circulation de fluide étant délimité respectivement par une surface périphérique interne de ladite au moins une partie externe et par une surface périphérique externe de ladite au moins une partie interne.

Ainsi configuré, le rotor de l'invention pourra être refroidi par un fluide de refroidissement circulant successivement à travers l'arbre de rotor depuis le canal d'entrée, puis le long d'un des flasques avant et arrière, puis à travers les aimants permanents, puis le long de l'autre flasque avant et arrière, pour finalement sortir à travers le canal de sortie. Du fait du contact direct du fluide de refroidissement avec les aimants permanents, une meilleure évacuation de la chaleur générée dans le rotor lors de son fonctionnement pourra ainsi être obtenue. La solution de l'invention présente également l'avantage de ne pas nécessiter la présence de cavités traversantes additionnelles à l'intérieur du paquet de tôles pour assurer la circulation du fluide de refroidissement.

Selon d'autres caractéristiques, le rotor de l'invention comporte une ou plusieurs des caractéristiques optionnelles suivantes considérées seules ou en combinaison :
- la surface périphérique interne de ladite au moins une partie externe d'au moins un des aimants permanents est munie de nervures qui sont en contact avec la surface périphérique externe de ladite au moins une partie interne.
- la surface périphérique externe de ladite au moins une partie interne d'au moins un des aimants permanents est munie de nervures qui sont en contact avec la surface périphérique interne de ladite au moins une partie externe.
- pour chaque aimant permanent, l'une desdites parties interne ou externe est formée d'une matrice en matière thermoplastique incorporant des particules possédant des propriétés magnétiques et l'autre partie est obtenue par frittage, ou par impression 3D, ou par procédé PIM de particules possédant des propriétés magnétiques.
- les particules possédant des propriétés magnétiques utilisées pour la formation de ladite au moins une partie interne et/ou externe sont constituées d'un matériau choisi parmi la ferrite ou une terre rare.
- la matrice en matière thermoplastique est constituée d'un matériau choisi parmi le polyamide 6 (PA 6), le polyamide 6-6 (PA 6-6), le polyamide 12 (PA 12), et le polysulfure de phénylène (PPS).
- ledit au moins un canal de liaison avant est en communication fluidique avec ledit canal d'entrée et ledit au moins un canal de liaison arrière est en communication fluidique avec ledit canal de sortie, de telle sorte qu'un fluide de refroidissement destiné au refroidissement du rotor puisse circuler dans le rotor successivement au travers du canal d'entrée, puis entre le flasque avant et la face latérale avant du paquet de tôles au travers dudit au moins un canal de liaison avant, puis à l'intérieur des aimants permanents au travers desdits canaux longitudinaux de circulation de fluide, puis entre la face latérale arrière du paquet de tôles et le flasque arrière au travers dudit au moins un canal de liaison arrière, et finalement au travers du canal de sortie.
- l'arbre comprend une portion d'extrémité avant creuse et une portion d'extrémité arrière creuse séparée de la portion d'extrémité avant par une portion centrale pleine, la portion d'extrémité avant, respectivement la portion d'extrémité arrière, étant traversée par une cavité centrale de forme cylindrique, ladite cavité centrale formant le canal d'entrée, respectivement le canal de sortie, de l'arbre, et en ce qu'au moins un trou orienté radialement par rapport à l'axe de l'arbre est formé à l'intérieur de la portion d'extrémité avant, respectivement de la portion d'extrémité arrière, de manière à déboucher d'un côté dans le canal d'entrée, respectivement le canal de sortie, et de l'autre côté dans ledit au moins un canal de liaison avant, respectivement ledit au moins un canal de liaison arrière.
- ledit au moins un canal de liaison arrière est en communication fluidique avec ledit canal d'entrée et ledit au moins un canal de liaison avant est en communication fluidique avec ledit canal de sortie, de telle sorte qu'un fluide de refroidissement destiné au refroidissement du rotor puisse circuler dans le rotor successivement au travers du canal d'entrée, puis entre le flasque arrière et la face latérale arrière du paquet de tôles au travers dudit au moins un canal de liaison arrière, puis à l'intérieur des aimants permanents au travers desdits canaux longitudinaux de circulation de fluide, puis entre le flasque avant et la face latérale avant au travers dudit au moins un canal de liaison avant, et finalement au travers du canal de sortie.
- l'arbre comprend une portion d'extrémité avant creuse et une portion d'extrémité arrière pleine séparée de la portion d'extrémité avant par une portion centrale creuse, la portion d'extrémité avant et la portion centrale étant traversées par une cavité centrale de forme cylindrique, ladite cavité centrale formant le canal d'entrée de l'arbre, la portion d'extrémité avant étant également traversée par au moins une cavité périphérique alignée coaxialement avec la cavité centrale, ladite au moins une cavité périphérique formant le canal de sortie de l'arbre, et au moins un trou orienté radialement par rapport à l'axe de l'arbre étant formé à l'intérieur de la portion d'extrémité avant, respectivement de la portion centrale, de manière à déboucher d'un côté dans le canal de sortie, respectivement le canal d'entrée, et de l'autre côté dans ledit au moins un canal de liaison avant, respectivement ledit au moins un canal de liaison arrière.
- l'arbre comprend un corps principal muni d'un trou borgne aligné selon l'axe de l'arbre, ledit trou borgne comprenant deux sections contiguës de diamètres internes différents, à savoir une première section possédant un premier diamètre interne et une deuxième section possédant un deuxième diamètre interne, et un insert en matière plastique étant logé à l'intérieur du trou borgne au niveau de la première section, ledit insert étant formé d'une partie tubulaire alignée avec la deuxième section du trou borgne et possédant un diamètre interne qui est sensiblement égal au deuxième diamètre interne, et d'une partie annulaire s'étendant radialement autour de l'une des extrémités de la partie tubulaire, ladite partie annulaire étant positionnée au niveau de l'interface entre la première section et la deuxième section du trou borgne et possédant un diamètre externe qui est sensiblement égal au premier diamètre interne, le canal d'entrée de l'arbre étant défini conjointement par la partie tubulaire de l'insert et par la deuxième section du trou borgne et le canal de sortie de l'arbre correspondant à l'espace délimité par la première section du trou borgne et par les parties tubulaire et annulaire de l'insert.
- l'insert comprend une ou plusieurs ailettes de séparation s'étendant radialement depuis la périphérie externe de la partie tubulaire, chacune des ailettes de séparation étant configurées pour séparer le canal de sortie en deux ou plusieurs segments de canaux de sortie.
- chacun des flasques avant et arrière possède une face interne en contact avec une face latérale du paquet de tôles, ladite face interne étant munie d'au moins une rainure radiale, ladite au moins une rainure radiale possédant une extrémité proximale débouchant sur une zone centrale évidée dudit flasque, au niveau de laquelle ladite au moins une rainure radiale est en communication fluidique avec le canal d'entrée ou de sortie de l'arbre, et ladite au moins une rainure radiale étant alignée axialement avec l'un des aimants permanents et possédant sensiblement la même forme générale que ledit aimant permanent dans un plan perpendiculaire à l'axe, de sorte que ledit au moins un canal longitudinal de circulation de fluide dudit aimant permanent débouche, d'un côté, dans ladite au moins une rainure radiale du flasque avant et, de l'autre côté, dans ladite au moins une rainure radiale du flasque arrière.
- au moins deux trous radiaux sont formés au travers de l'arbre, chacun desdits trous radiaux débouche, d'un côté, sur le canal d'entrée ou de sortie de l'arbre et , de l'autre côté, sur la paroi périphérique de l'arbre, en étant en communication fluidique avec la zone centrale évidée du flasque avant ou arrière.

L'invention concerne également un moteur électrique comprenant un rotor tel que défini précédemment.

L'invention sera davantage comprise à la lecture de la description non limitative qui va suivre, faite en référence aux figures ci-annexées.
[Fig. 1] est une vue en perspective d'un rotor selon un premier mode de réalisation de l'invention.
[Fig. 2] est une vue en perspective et en coupe longitudinale du rotor représenté sur la figure 1.
[Fig. 3] est une vue similaire à la figure 1, le flasque avant et les vis de fixation du rotor ayant été retirés.
[Fig. 4] est une vue axiale avant du rotor représenté sur la figure 3.
[Fig. 5a] est une vue en perspective d'un aimant permanent équipant le rotor de la figure 1.
[Fig. 5b] est une vue en perspective de la partie interne de l'aimant permanent de la figure 5a.
[Fig. 5c] est une vue en perspective de la partie externe de l'aimant permanent de la Figure 5a.
[Fig. 6] est une vue en coupe longitudinale d'un moteur électrique incorporant le rotor de la figure 1.
[Fig. 7] est une vue en coupe longitudinale de l'arbre équipant le rotor de la figure 1.
[Fig. 8] est une vue axiale avant de l'arbre de la figure 7.
[Fig. 9] est une vue en perspective de l'insert utilisé dans l'arbre de la figure 7.
[Fig. 10] est une vue en coupe longitudinale d'un arbre équipant un rotor selon un deuxième mode de réalisation de l'invention.
[Fig. 11] est une vue en perspective de la face externe du flasque avant utilisé dans le rotor de la figure 1.
[Fig. 12] est une vue en perspective de la face interne du flasque de la figure 11, dans laquelle une extrémité de l'arbre a été représentée de manière tronquée.
[Fig. 13] est une vue en perspective de la face externe du flasque arrière utilisé dans le rotor de la figure 1.
[Fig. 14] est une vue en perspective de la face interne du flasque de la figure 13, dans laquelle une extrémité de l'arbre a été représentée de manière tronquée.

Dans l'ensemble de la description et dans les revendications, les termes « axial » et « radial » et leurs dérivés sont définis par rapport à l'axe de rotation du rotor. Ainsi, une orientation axiale se rapporte à une orientation parallèle à l'axe de rotation du rotor et une orientation radiale se rapporte à une orientation perpendiculaire à l'axe de rotation du rotor. Par ailleurs, par convention, les termes « avant » et « arrière » font référence à des positions séparées le long de l'axe de rotation du rotor. En particulier, l'extrémité « avant » de l'arbre du rotor correspond à l'extrémité de l'arbre sur laquelle peut être fixé(e) une poulie, un pignon, une cannelure destiné(e) à transmettre le mouvement de rotation du rotor à tout autre dispositif similaire de transmission de mouvements.

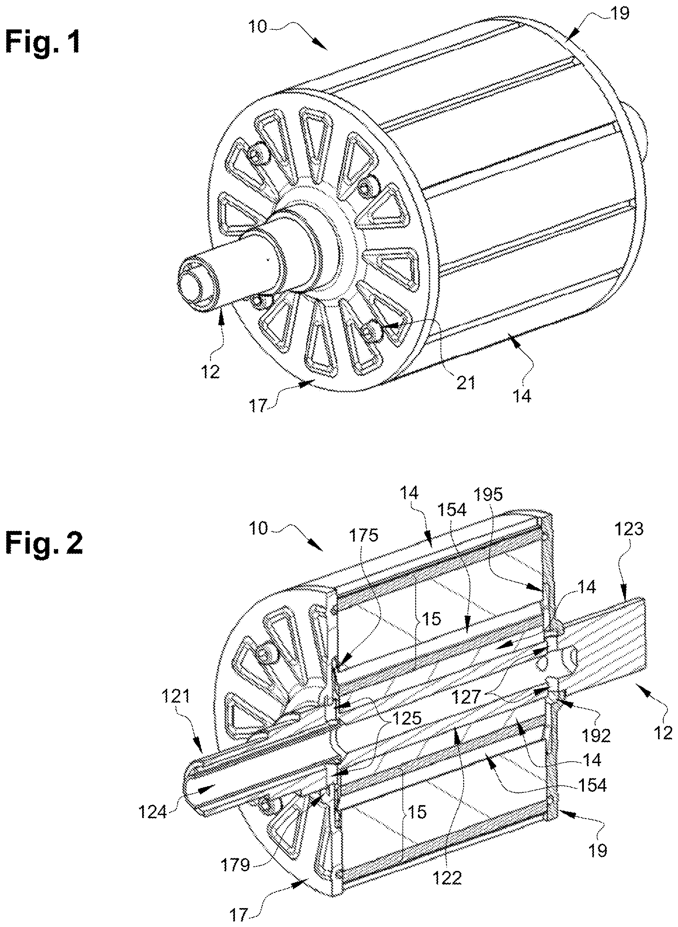

Les figures 1 à 4 représentent un rotor 10 selon un premier mode de réalisation de l'invention. Le rotor 10 comprend un corps sensiblement cylindrique formé par un paquet de tôles 14 réalisé dans un matériau ferromagnétique, notamment en acier, ledit corps étant solidaire en rotation d'un arbre 12 monté rotatif autour d'un axe X. Le paquet de tôles 14 est monté coaxialement sur l'arbre 12. L'arbre 12 pourra être emmanché en force à l'intérieur d'une ouverture centrale du paquet de tôles 14 de manière à lier en rotation le corps du rotor avec l'arbre 12.

Le paquet de tôles 14 est formé d'un empilement axial de tôles qui s'étendent dans un plan radial perpendiculaire à l'axe X de l'arbre 12. Une pluralité de trous de fixation 11 sont réalisés dans le paquet de tôles 14 pour permettre le passage de vis de fixation 21 des tôles du paquet. Ces trous de fixation 11 sont traversants de sorte qu'il est possible de faire passer à l'intérieur de chaque trou 11 une vis 21. Une première extrémité des vis 21 est en appui contre la face externe d'un flasque d'extrémité avant 17, tandis que l'autre extrémité des vis dépasse de la face externe d'un flasque d'extrémité arrière 19 et est filetée de manière à recevoir un écrou qui, une fois vissé, exerce une pression contre ladite face externe. Ainsi, le paquet de tôles 14 est enserré axialement entre le flasque d'extrémité avant 17 et le flasque d'extrémité arrière 19. Ces flasques 17, 19 pourront avantageusement permettre d'assurer un équilibrage du rotor 10. L'équilibrage de ces flasques peut être effectué par ajout ou retrait de matière. Le retrait de matière peut être effectué par usinage, tandis que l'ajout de matière peut être effectué en implantant des éléments dans des ouvertures prévues à cet effet et réparties suivant la circonférence du flasque 17, 19.

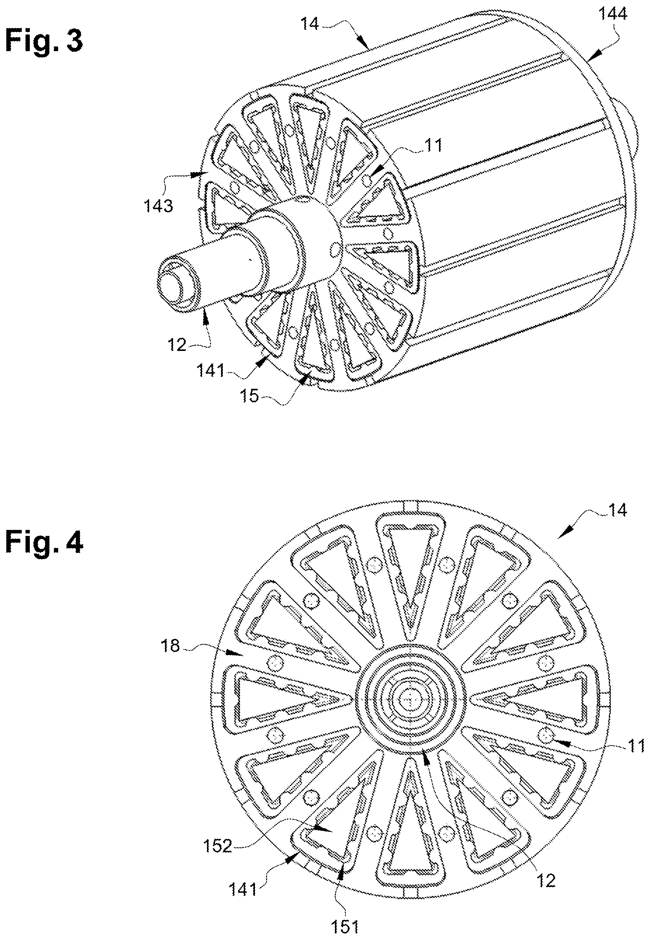

Comme représenté sur les figures 3 et 4, le rotor 10 comprend en outre une pluralité d'aimants permanents 15 destinés à être logés dans une pluralité de cavités internes 141 formées à l'intérieur du paquet de tôles 14, chacune des cavités internes 141 logeant au moins un aimant permanent 15. Les cavités 141 s'étendent suivant une direction radiale par rapport à l'axe X et sont axialement traversantes. Elles possèdent une section sensiblement triangulaire et sont réparties uniformément autour de l'axe X. Deux cavités 141 directement adjacentes sont séparées par un segment radial 18 du paquet de tôles 14 de sorte que le corps du rotor est constitué d'une alternance de cavités 141 et de segments 18 lorsque l'on suit une circonférence du rotor 10. Les aimants permanents 15 possèdent une forme externe sensiblement complémentaire de celle des cavités 141, de sorte que chaque aimant permanent 15 est logé sans jeu à l'intérieur d'une cavité 141. Les aimants permanents 15 sont à aimantation orthoradiale, c'est-à-dire que les deux faces d'extrémité de chaque aimant permanent 15 qui sont adjacentes l'une par rapport à l'autre dans le sens orthoradial sont magnétisées de manière à pouvoir générer un flux magnétique suivant une orientation orthoradiale par rapport à l'axe X. Les aimants permanents 15 situés dans deux cavités 141 consécutives sont donc de polarités alternées. Ainsi disposés, les aimants permanents 15 génèrent dans le paquet de tôles 14 un flux magnétique orienté radialement et dirigé vers la périphérie externe du corps du rotor.

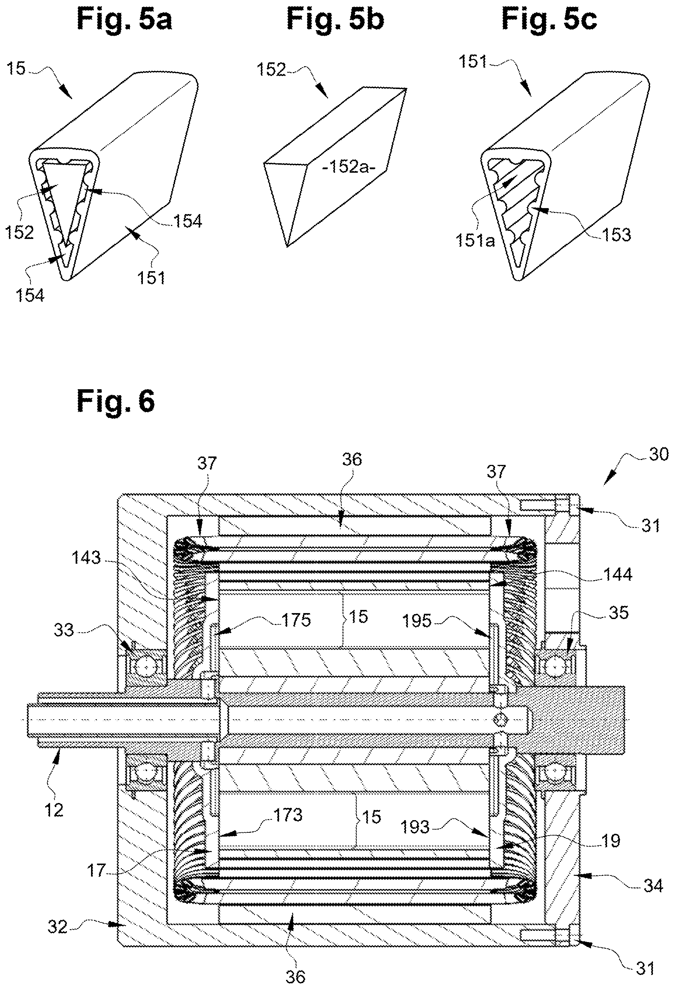

Dans le mode de réalisation représenté sur les figures 5a à 5c, chaque aimant permanent 15 possède une forme générale de prisme droit à base sensiblement triangulaire. Dans d'autres modes de réalisation (non représentés) de l'invention, les aimants permanents 15 pourront également posséder une forme générale de prisme droit à base trapézoidale ou rectangulaire, ou être de forme cylindrique. Chaque aimant permanent 15 est formé par l'assemblage de deux parties, respectivement une partie externe 151 et une partie interne 152, la partie interne 152 étant logée à l'intérieur de la partie externe 151. Dans la configuration représentée, la partie interne 152 est pleine et possède une forme de prisme droit à base triangulaire, les sommets du triangle étant pointus, tandis que la partie externe 151 est creuse et possède une forme de prisme droit à base triangulaire, les sommets du triange étant arrondis. Les parties externe et interne 151, 152 pourront être reliées l'une à l'autre par tout moyen connu, en particulier par emmanchement serré, par collage, par clippage ou par soudage. La partie externe 151 et la partie interne 152 pourront être formées soit à partir d'une matrice en matière thermoplastique incorporant des particules possédant des propriétés magnétiques, soit à partir de particules possédant des propriétés magnétiques lesquelles seront soumises à un procédé de frittage, ou d'impression 3D, ou PIM (Powder Injection Molding). Une configuration possible pourra notamment consister à utiliser une matrice thermoplastique contenant des particules à base de ferrite ou de terres rares pour former la partie externe 151 de l'aimant permanent 15, la partie interne 152 étant formée par frittage de particules de ferrite ou de terres rares. Une autre configuration possible consistera à utiliser une matrice thermoplastique contenant des particules de ferrite ou de terres rares pour former la partie interne 152 de l'aimant permanent 15, la partie externe 151 étant formée par frittage de particules de ferrite ou de terres rares. Une autre configuration possible consistera à utiliser une matrice thermoplastique contenant des particules de ferrite ou de terres rares pour former la partie interne 152 et la partie externe 151. Dans ces trois configurations possibles, la matrice en matière thermoplastique de la partie externe 151, respectivement de la partie interne 152, pourra être constituée de matière thermoplastique du type polyamide 6 (PA 6), de polyamide 6-6 (PA 6-6), de polyamide 12 (PA 12), aromatique ou tout autre nature, ou de polysulfure de phénylène (PPS).

Comme représenté sur la figure 5c, la surface périphérique interne 151a de la partie externe 151 de chaque aimant permanent 15 est munie de nervures 153 qui sont destinées à venir en contact avec la surface périphérique externe 152a de la partie interne 152, lorsque les deux parties sont assemblées ensemble dans la configuration finie de l'aimant permanent 15 (voir figure 5a). Ces nervures 153 créent des espaces intercalaires 154 entre les parties externe et interne 151, 152, lesdits espaces intercalaires 154 s'étendant parallélement à la direction longitudinale définie par l'aimant permanent 15. Chaque espace intercalaire 154 est délimité respectivement par la surface périphérique interne 151a de la partie externe 151 et par la surface périphérique externe 152a de la partie interne 152. Comme expliqué dans les paragraphes suivants, ces espaces intercalaires 154 sont configurés pour former des canaux de circulation de fluide à l'intérieur des aimants permanents 15. Ces canaux de circulation de fluide 154 permettront ainsi de faire circuler un fluide de refroidissement à travers les aimants permanents 15, ce qui, au final, permettra d'évacuer la chaleur générée dans le rotor 10 lors de son fonctionnement. Les nervures 153 pourront posséder toute forme envisageable. Par ailleurs, dans d'autres variantes de réalisation de l'invention (non représentées), il sera envisageable de former les nervures 153 au niveau de la surface périphérique externe 152a de la partie interne 152 des aimants permanents 15, lesdites nervures 153 étant en contact avec la surface périphérique interne 151a de la partie externe 151.

En référence à la figure 6, il est représenté un moteur électrique 30 équipé du rotor 10 de la figure 1. Ce moteur électrique 30 comprend notamment un carter en deux parties logeant le rotor 10 et un stator 36 annulaire qui entoure le rotor 10 de manière coaxiale à l'arbre 12. Le carter comprend notamment un palier avant 32 et un palier arrière 34 connectés l'un à l'autre, par exemple au moyen de vis de fixation 31. Les paliers 32, 34 présentent une forme creuse et portent chacun centralement un roulement à billes, respectivement 33 et 35, pour le montage en rotation de l'arbre 12. Les paliers avant et arrière 32, 34 seront avantageusement constitués de métal. Des chignons 37 font saillie axialement de part et d'autre du corps de stator 36 et sont logés dans l'espace intermédiaire séparant le stator 36 des paliers respectifs 32, 34.

Comme décrit précédemment, le paquet de tôles 14 du rotor 10 incorpore des aimants permanents 15 qui définissent chacun un ou plusieurs canaux longitudinaux 154 de circulation de fluide. Chaque canal longitudinal 154 débouche, à l'une de ses extrémités, au niveau de la face latérale avant 143 dudit paquet de tôles 14, et, à une autre de ses extrémités, au niveau de la face latérale arrière 144 dudit paquet de tôles 14. Chacune des faces latérales avant et arrière 143, 144 fait face et est directement adjacente à une face interne 173, 193 des flasques avant et arrière 17, 19 respectivement.

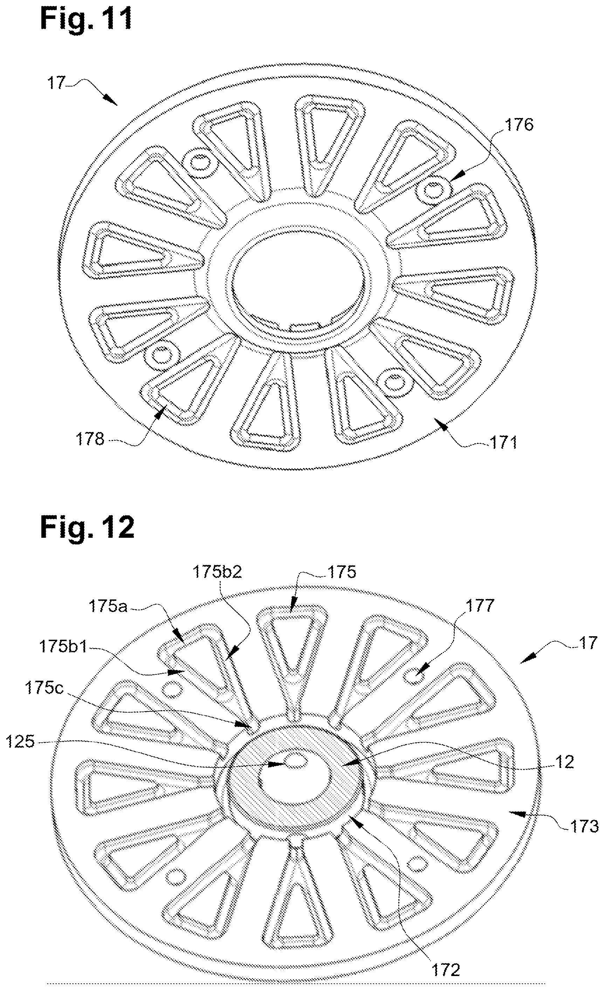

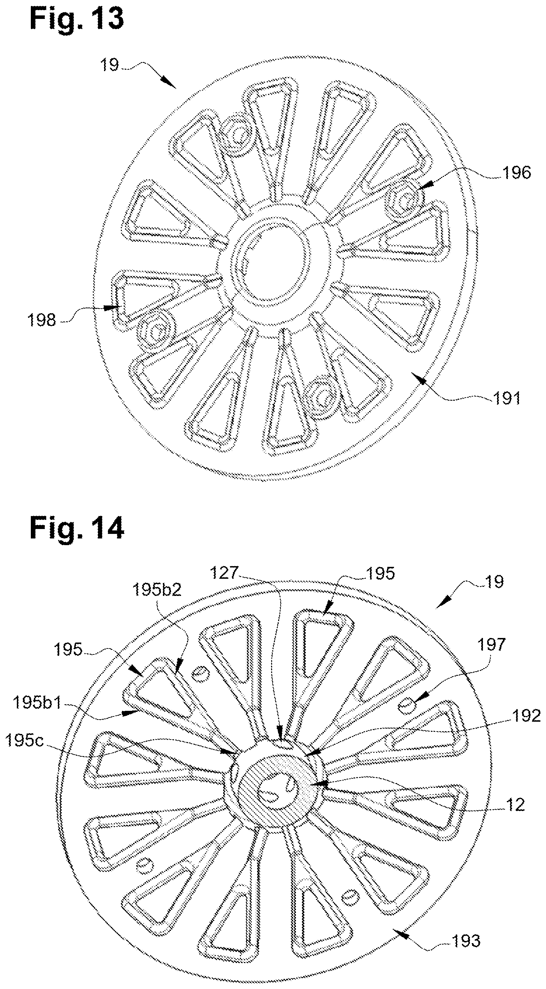

Les faces externe et interne 171, 173 du flasque avant 17 ont été représentées sur les figures 11 et 12 respectivement et les faces externe et interne 191, 193 du flasque arrière 19 ont été représentées sur les figures 13 et 14 respectivement.

Le flasque avant 17 se présente sensiblement sous la forme d'un disque. La face interne 173 du flasque avant 17 est en contact avec la face latérale avant 143 du paquet de tôles 14. La face interne 173 est munie d'une série de douze rainures 175 de forme oblongue s'étendant radialement depuis une zone centrale 172 évidée du flasque avant 17 jusqu'à une zone intermédiaire dudit flasque, les douze rainures 175 étant décalées d'un angle de 30° les unes par rapport aux autres. La face externe 171 du flasque avant 17 présente de ce fait une série de douze excroissances 178 épousant la forme en creux des rainures 175 sous-jacentes. Il est par ailleurs prévu des cavités 176 à section circulaire au niveau de la face externe 171, chacune desdites cavités 176 étant apte à loger la tête d'une vis 21 destinée à relier les flasques avant et arrière 17, 19. Un alésage 177 est de ce fait formé au travers du flasque avant 17 pour permettre le passage de la vis 21.

Chacune desdites rainures radiales 175 du flasque avant 17 est notamment formée d'une section orthoradiale 175a prolongées à chacune de ses extrémités par deux sections obliques 175b1 et 175b2 faisant un angle avec ladite section orthoradiale 175a, lesdites sections obliques 175b1 et 175b2 se rejoignant au niveau d'une extrémité proximale 175c qui jouxte la zone centrale 172. Ainsi configurées, les rainures radiales 175 possèdent sensiblement la même forme générale que les aimants permanents 15 dans un plan perpendiculaire à l'axe X. Les rainures radiales 175 débouchent au niveau de leur extrémité proximale 175c dans une zone centrale 172 évidée du flasque avant 17 qui est en communication fluidique avec des trous 125 de l'arbre 12 (voir description détaillée plus loin). Dans la position montée du flasque avant 17 (représentée sur la figure 6), chaque rainure radiale 175 est alignée axialement avec l'un des aimants permanents 15 de sorte à être en communication fluidique avec le ou les canaux longitudinaux 154 de circulation de fluide dudit aimant permanent 15.

De la façon similaire, le flasque arrière 19 se présente sensiblement sous la forme d'un disque. La face interne 193 du flasque arrière 19 est en contact avec la face latérale arrière 144 du paquet de tôles 14. La face interne 193 est munie d'une série de douze rainures 195 de forme oblongue s'étendant radialement depuis une zone centrale 192 évidée du flasque arrière 19 jusqu'à une zone intermédiaire dudit flasque, les douze rainures 195 étant décalées d'un angle de 30° les unes par rapport aux autres. La face externe 191 du flasque arrière 19 présente de ce fait une série de douze excroissances 198 épousant la forme en creux des rainures 195 sous-jacentes. Il est par ailleurs prévu des cavités 196 à section hexagonale au niveau de la face externe 191, chacune desdites cavités 196 étant apte à loger l'écrou de la vis 21 destiné à relier les flasques avant et arrière 17, 19. Un alésage 197 est de ce fait formé au travers du flasque arrière 19 pour permettre le passage de la vis 21.

Chacune desdites rainures radiales 195 du flasque arrière 19 est notamment formée d'une section orthoradiale 195a prolongées à chacune de ses extrémités par deux sections obliques 195b1 et 195b2 faisant un angle avec ladite section orthoradiale 195a, lesdites sections obliques 195b1 et 195b2 se rejoignant au niveau d'une extrémité proximale 195c qui jouxte la zone centrale 192. Ainsi configurées, les rainures radiales 195 possèdent sensiblement la même forme générale que les aimants permanents 15 dans un plan perpendiculaire à l'axe X. Les rainures radiales 195 débouchent directement, au niveau de leur extrémité proximale 195c, dans la zone centrale 192 évidée du flasque arrière 19 qui est en communication fluidique avec des trous 127 de l'arbre 12 (voir description détaillée plus loin). Dans la position montée du flasque avant 19 (représentée sur la figure 6), chaque rainure radiale 195 est alignée axialement avec l'un des aimants permanents 15 de sorte à être en communication fluidique avec le ou les canaux longitudinaux 154 de circulation de fluide dudit aimant permanent 15.

Ainsi, chaque canal longitudinal 154 des aimants permanents 15 débouche, d'un côté, dans l'une des rainures radiales 175 du flasque avant 17 et, de l'autre côté, dans l'une des rainures radiales 195 du flasque arrière 19. Par convention, les rainures radiales 175 sont ainsi appelées canaux de liaison avant et les rainures radiales 195 sont appelées canaux de liaison arrière.

Comme illustré sur la figure 2, les canaux de liaison avant 175 du flasque avant 17 sont en communication fluidique, via la zone centrale 172, avec des trous radiaux 125 formés à travers une portion d'extrémité avant 121 de l'arbre 12 et les canaux de liaison arrière 195 du flasque arrière 19 sont en communication fluidique, via la zone centrale 192, avec des trous radiaux 127 formés à travers une portion d'extrémité arrière 123 de l'arbre 12. Ainsi, une communication fluidique s'opère entre les trous radiaux 125 de l'arbre 12 et les canaux longitudinaux 154 des aimants permanents 15 par l'intermédiaire, successivement, de la zone centrale 172 et des rainures radiales 175 du flasque avant 17. De manière similaire, une communication fluidique s'opère entre les trous radiaux 127 de l'arbre 12 et les canaux longitudinaux 154 des aimants permanents 15 par l'intermédiaire, successivement, de la zone centrale 192 et des rainures radiales 195 formées au niveau de la face interne 193 du flasque arrière 19.

La circulation du fluide de refroidissement à l'intérieur du rotor 10 de la figure 1 dépendra de la géométrie interne de l'arbre 12.

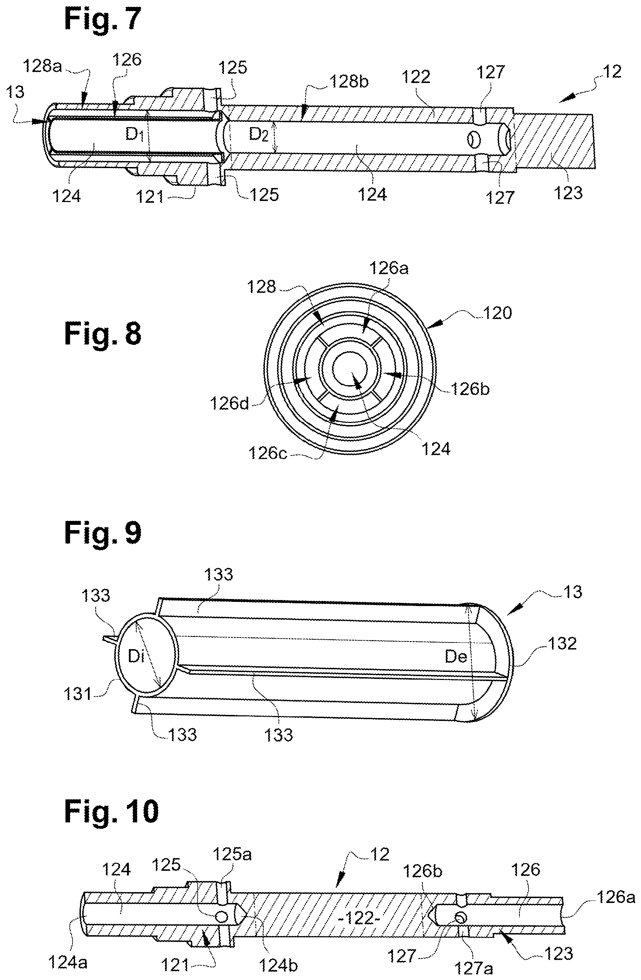

Ainsi, dans la configuration spécifique représentée sur la figure 2, le rotor 10 est équipé d'un arbre 12 qui est réprésenté en détail sur les figures 7 à 9. Dans cette configuration spécifique, l'arbre 12 comprend notamment un corps principal 120 formé d'une portion d'extrémité avant 121 et d'une portion d'extrémité arrière 123, lesdites portions d'extrémité avant et arrière étant séparées par une portion centrale 122 (la portion centrale 122 est délimitée par des traits pointillés sur la figure 7). Le corps principal 120 est muni d'un trou borgne 128 aligné selon l'axe X de l'arbre 12. Ce trou borgne 128 comprend deux sections contiguës de diamètres internes différents, à savoir une première section 128a possédant un diamètre interne D1 et une deuxième section 128b possédant un diamètre interne D2. Un insert 13 en matière plastique est logé à l'intérieur du trou borgne 128 au niveau de la première section 128a. Comme représenté sur la figure 9, cet insert 13 est formé d'une partie tubulaire 131, possédant un diamètre interne Di sensiblement égal au diamètre interne D2, et d'une partie annulaire 132 s'étendant radialement autour de l'une des extrémités de la partie tubulaire 131, ladite partie annulaire 132 possédant un diamètre externe De sensiblement égal au diamètre interne D1. Quatre ailettes 133 s'étendent radialement depuis la périphérie externe de la partie tubulaire 131, lesdites ailettes 133 étant perpendiculaires les unes aux autres. Chacune des ailettes 133 possède une longueur telle que son extrémité libre est tangente au bord périphérique externe de la partie annulaire 132. Lorsque l'insert 13 est fixé dans le corps principal 120, sa partie tubulaire 131 est alignée avec la deuxième section 128b du trou borgne 128 et sa partie annulaire 132 est positionnée au niveau de l'interface entre la première section 128a et la deuxième section 128b du trou borgne 128. Ainsi configuré, l'arbre 12 possède un premier canal 124, dit canal d'entrée, par lequel peut être acheminé un fluide de refroidissement destiné à refroidir le rotor 10, et au moins un deuxième canal 126, dit canal de sortie, par lequel peut sortir le fluide de refroidissement après avoir emmagasiné la chaleur provenant des aimants permanents 15 et du paquet de tôles 14. Le canal d'entrée 124 est formé conjointement par la partie tubulaire 131 de l'insert 13 et par la deuxième section 128b du trou borgne 128. Le canal de sortie 126 est défini par l'espace périphérique entourant la partie tubulaire 131 de l'insert 13. Le canal de sortie 126 est ainsi délimité par la paroi interne de la première section 128a du trou borgne 128 et par les parties tubulaire et annulaire 131, 132 de l'insert 13. Ce canal de sortie 126 est divisé respectivement en quatre segments 126a, 126b, 126c et 126d de canal de sortie, deux segments directement adjacents étant séparés par une ailette 133. Par ailleurs, l'arbre 12 est muni de quatre trous 125 orientés radialement par rapport à l'axe X de l'arbre 12, lesdits trous 125 étant formés à l'intérieur de la portion d'extrémité avant 121 de manière à déboucher, d'un côté, dans l'un des segments 126a-126d du canal de sortie 126 et, de l'autre côté, dans la zone centrale 172 du flasque avant 17 qui communique avec les canaux de liaison avant 175, comme représenté sur la figure 2. De manière similaire, quatre trous 127 orientés radialement par rapport à l'axe X de l'arbre 12 sont formés à l'intérieur de la portion centrale 122 (comme représenté sur la figure 7) de manière à déboucher, d'un côté, dans le canal d'entrée 124 et, de l'autre côté, dans la zone centrale 192 du flasque arrière 19 qui communique avec les canaux de liaison arrière 195.

Ainsi configuré, le rotor 10 pourra être refroidi par un fluide de refroidissement, comme de l'huile par exemple, ledit fluide de refroidissement circulant dans le rotor successivement au travers du canal d'entrée 124, puis entre le flasque arrière 19 et la face latérale arrière 144 du paquet de tôles 14 au travers des canaux de liaison arrière 195, puis à l'intérieur des aimants permanents 15 au travers des canaux longitudinaux 154, puis entre le flasque avant 17 et la face latérale avant 143 du paquet de tôles 14 au travers des canaux de liaison avant 175, et finalement au travers des segments 126a-126d de canal de sortie.

En référence à la figure 10, il est représenté une variante de réalisation d'un arbre 12 pouvant équiper un rotor selon l'invention. Cet arbre 12 comprend notamment une portion d'extrémité avant 121 creuse et une portion d'extrémité arrière 123 creuse séparée de la portion d'extrémité avant 121 par une portion centrale 122 pleine (la portion centrale 122 est délimitée par des traits pointillés sur la figure 10). La portion d'extrémité avant 121 est traversée par une cavité centrale 124 de forme cylindrique, ladite cavité centrale 124 possédant une extrémité avant 124a ouverte vers l'extérieur et une extrémité arrière 124b fermée. A proximité de l'extrémité arrière 124b est formée une série de quatre trous 125 orientés radialement par rapport à l'axe X de l'arbre 12, lesdits trous 125 étant décalés de 90° les uns par rapport aux autres. Chacun des trous 125 possède une extrémité 125a radialement distante de la cavité centrale 124 et ouverte vers l'extérieur. La portion d'extrémité avant 121 est ainsi configurée pour permettre l'entrée d'un flux de fluide de refroidissement au niveau de l'extrémité avant 124a de la cavité centrale 124, puis la circulation dudit fluide de refroidissement au travers de la cavité centrale 124 jusqu'à atteindre les trous radiaux 125, puis au travers des trous radiaux 125 jusqu'à atteindre les extrémités 125a des trous 125. De manière symétrique, la portion d'extrémité arrière 123 est traversée par une cavité centrale 126 de forme cylindrique, ladite cavité possédant une extrémité arrière 126a ouverte vers l'extérieur et une extrémité avant 126b fermée. A proximité de l'extrémité avant 126b est formée une série de quatre trous 127 orientés radialement par rapport à l'axe X de l'arbre 12, lesdits trous 127 étant décalés de 90° les uns par rapport aux autres. Chacun des trous 127 possède une extrémité 127a radialement distante de la cavité centrale 126 et ouverte vers l'extérieur. La portion d'extrémité arrière 123 est ainsi configurée pour permettre l'entrée d'un flux de fluide de refroidissement au niveau des extrémités 127a des trous radiaux 127, puis la circulation dudit fluide de refroidissement au travers des trous radiaux 127 jusqu'à atteindre la cavité centrale 126, puis au travers de la cavité centrale 126 jusqu'à atteindre l'extrémité arrière 126a de la cavité centrale 126.

Dans la suite de la description, et par convention, la cavité centrale 124 sera ainsi appelée le canal d'entrée du fluide de refroidissement et la cavité centrale 126 sera appelée le canal de sortie du fluide de refroidissement.

En équipant le rotor 10 de la figure 1 de l'arbre 12 de la figure 10 en lieu et place de l'arbre 12 de la figure 7, il est ainsi possible de modifier le trajet suivi par le fluide de refroidissement à l'intérieur du rotor 10. En particulier, le fluide de refroidissement pourra circuler dans le rotor 10 successivement au travers du canal d'entrée 124, puis entre le flasque avant 17 et la face latérale avant 143 du paquet de tôles 14 au travers des canaux de liaison avant 175, puis à l'intérieur des aimants permanents 15 au travers des canaux longitudinaux 154 de circulation de fluide, puis entre la face latérale arrière 144 du paquet de tôles 14 et le flasque arrière 19 au travers des canaux de liaison arrière 195, et finalement au travers du canal de sortie 126 de l'arbre 12.

L'invention n'est évidemment pas limitée aux modes de réalisation tels que décrits précédemment. En particulier, dans d'autres modes de réalisation (non représentés) de l'invention, le nombre de cavités internes 141, d'aimants permanents 15, de canaux de liaison avant et arrière 175, 195 pourra différer de douze et le nombre de trous radiaux 125, 127 pourra différer de quatre.

Ainsi, une configuration envisageable de l'invention pourrait consister en un rotor comprenant deux, ou tout multiple de deux, cavités internes 141 disposées de manière symétrique par rapport à l'axe X de l'arbre 12.

Dans une autre configuration envisageable de l'invention, le rotor pourra comporter trois (ou un autre nombre impair) cavités internes 141, lesdites deuxièmes cavités internes 141 étant réparties de manière régulière autour de l'axe X afin de ne pas créer de balourd pour le rotor.

Le nombre d'aimants permanents 15 et de canaux de liaison avant et arrière 175, 195 sera de préférence choisi de manière à être égal au nombre de cavités internes 141.

Dans une autre configuration envisageable de l'invention, le rotor 10 de la figure 1 pourrait comporter un insert 13 sans ailettes de séparation 133. De ce fait, le canal de sortie 126 ne serait pas divisé en segments 126a-126d de canal de sortie, mais consisterait en une unique cavité périphérique alignée coaxialement avec la cavité centrale 124 formée par la partie tubulaire 131 de l'insert 13.

## Revendications

1. Rotor (10) pour moteur électrique (30) comprenant :
- un arbre (12) de rotor monté rotatif autour d'un axe (X);
- un paquet de tôles (14) monté coaxialement sur l'arbre (12) de rotor, ledit paquet de tôles (14) comprenant des cavités internes (141) symétriques par rapport à l'axe (X) de l'arbre (12) et entre elles, lesdites cavités internes (141) traversant axialement l'intégralité du paquet de tôles (14) de telle sorte qu'elles débouchent, à l'une de leurs extrémités, au niveau d'une face latérale avant (143) dudit paquet de tôles (14) et, à une autre de leurs extrémités, au niveau d'une face latérale arrière (144) dudit paquet de tôles (14);
- une pluralité d'aimants permanents (15) logés à l'intérieur des cavités internes (141) du paquet de tôles (14);
- un flasque avant (17) et un flasque arrière (19) montés coaxialement sur l'arbre (12) de rotor et agencés axialement de part et d'autre du paquet de tôles (14) de telle sorte à être contigus respectivement aux faces latérales avant et arrière (143, 144) du paquet de tôles (14);
dans lequel l'arbre (12) est muni d'au moins un premier canal interne (124) de circulation d'un fluide de refroidissement, dit canal d'entrée, et d'au moins un deuxième canal interne (126) de circulation d'un fluide de refroidissement, dit canal de sortie, et dans lequel le flasque avant (17), respectivement le flasque arrière (19), est configuré pour former avec la face latérale avant (143), respectivement la face latérale arrière (144), du paquet de tôles (14) au moins un canal de liaison avant (175), respectivement au moins un canal de liaison arrière (195), à l'intérieur duquel peut circuler un fluide de refroidissement, ledit au moins un canal de liaison avant (175), respectivement arrière (195), étant en communication fluidique avec l'un desdits canaux d'entrée et de sortie (124, 126), et
dans lequel chaque aimant permanent (15) est muni d'au moins un canal longitudinal (154) de circulation de fluide débouchant, d'un côté, sur ledit au moins un canal de liaison avant (175), et, de l'autre côté, sur ledit au moins un canal de liaison arrière (195), ledit au moins un canal longitudinal (154) de circulation de fluide étant configuré pour permettre la circulation d'un fluide de refroidissement,
**caractérisé en ce que** chaque aimant permanent (15) est formé par l'assemblage d'au moins deux parties, respectivement au moins une partie externe (151) et au moins une partie interne (152), ladite au moins une partie interne (152) étant logée à l'intérieur de ladite au moins une partie externe (151), et **en ce que** ledit au moins un canal longitudinal (154) de circulation de fluide est délimité respectivement par une surface périphérique interne (151a) de ladite au moins une partie externe (151) et par une surface périphérique externe (152a) de ladite au moins une partie interne (152).

2. Rotor (10) selon la revendication 1, **caractérisé en ce que** la surface périphérique interne (151a) de ladite au moins une partie externe (151) d'au moins un des aimants permanents (15) est munie de nervures (153) qui sont en contact avec la surface périphérique externe (152a) de ladite au moins une partie interne (152).

3. Rotor (10) selon la revendication 1 ou 2, **caractérisé en ce que** la surface périphérique externe (152a) de ladite au moins une partie interne (152) d'au moins un des aimants permanents (15) est munie de nervures qui sont en contact avec la surface périphérique interne (151a) de ladite au moins une partie externe (151).

4. Rotor (10) selon l'une des revendications 1 à 3, **caractérisé en ce que**, pour chaque aimant permanent (15), l'une desdites parties interne (152) ou externe (151) est formée d'une matrice en matière thermoplastique incorporant des particules possédant des propriétés magnétiques et l'autre partie est obtenue par frittage, ou par impression 3D, ou par procédé PIM de particules possédant des propriétés magnétiques.

5. Rotor (10) selon la revendication 4, **caractérisé en ce que** les particules possédant des propriétés magnétiques utilisées pour la formation de ladite au moins une partie interne et/ou externe sont constituées d'un matériau choisi parmi la ferrite ou une terre rare.

6. Rotor (10) selon la revendication 4 ou 5, **caractérisé en ce que** la matrice en matière thermoplastique est constituée d'un matériau choisi parmi le polyamide 6 (PA 6), le polyamide 6-6 (PA 6-6), le polyamide 12 (PA 12), et le polysulfure de phénylène (PPS).

7. Rotor (10) selon l'une des revendications précédentes, **caractérisé en ce que** ledit au moins un canal de liaison avant (175) est en communication fluidique avec ledit canal d'entrée (124) et ledit au moins un canal de liaison arrière (195) est en communication fluidique avec ledit canal de sortie (126), de telle sorte qu'un fluide de refroidissement destiné au refroidissement du rotor puisse circuler dans le rotor successivement au travers du canal d'entrée (124), puis entre le flasque avant (17) et la face latérale avant (143) du paquet de tôles (14) au travers dudit au moins un canal de liaison avant (175), puis à l'intérieur des aimants permanents (15) au travers desdits canaux longitudinaux (154) de circulation de fluide, puis entre la face latérale arrière (144) du paquet de tôles (14) et le flasque arrière (19) au travers dudit au moins un canal de liaison arrière (195), et finalement au travers du canal de sortie (126).

8. Rotor (10) selon la revendication 7, **caractérisé en ce que** l'arbre (12) comprend une portion d'extrémité avant (121) creuse et une portion d'extrémité arrière (123) creuse séparée de la portion d'extrémité avant (121) par une portion centrale (122) pleine, la portion d'extrémité avant (121), respectivement la portion d'extrémité arrière (123), étant traversée par une cavité centrale de forme cylindrique, ladite cavité centrale formant le canal d'entrée (124), respectivement le canal de sortie (126), de l'arbre (12), et **en ce qu'**au moins un trou (125, 127) orienté radialement par rapport à l'axe (X) de l'arbre (12) est formé à l'intérieur de la portion d'extrémité avant (121), respectivement de la portion d'extrémité arrière (123), de manière à déboucher d'un côté dans le canal d'entrée (124), respectivement le canal de sortie (126), et de l'autre côté dans ledit au moins un canal de liaison avant (175), respectivement ledit au moins un canal de liaison arrière (195).

9. Rotor (10) selon l'une des revendication 1 à 6, **caractérisé en ce que** ledit au moins un canal de liaison arrière (195) est en communication fluidique avec ledit canal d'entrée (124) et ledit au moins un canal de liaison avant (175) est en communication fluidique avec ledit canal de sortie (126), de telle sorte qu'un fluide de refroidissement destiné au refroidissement du rotor puisse circuler dans le rotor successivement au travers du canal d'entrée (124), puis entre le flasque arrière (19) et la face latérale arrière (144) du paquet de tôles (14) au travers dudit au moins un canal de liaison arrière (195), puis à l'intérieur des aimants permanents (15) au travers desdits canaux longitudinaux (214) de circulation de fluide, puis entre le flasque avant (17) et la face latérale avant (143) au travers dudit au moins un canal de liaison avant (175), et finalement au travers du canal de sortie (126).

10. Rotor (10) selon la revendication 9, **caractérisé en ce que** l'arbre (12) comprend une portion d'extrémité avant (121) creuse et une portion d'extrémité arrière (123) pleine séparée de la portion d'extrémité avant (121) par une portion centrale (122) creuse, la portion d'extrémité avant (121) et la portion centrale (122) étant traversées par une cavité centrale de forme cylindrique, ladite cavité centrale formant le canal d'entrée (124) de l'arbre (12), la portion d'extrémité avant (121) étant également traversée par au moins une cavité périphérique alignée coaxialement avec la cavité centrale, ladite au moins une cavité périphérique formant le canal de sortie (126) de l'arbre (12), et **en ce qu'**au moins un trou (125, 127) orienté radialement par rapport à l'axe (X) de l'arbre (12) est formé à l'intérieur de la portion d'extrémité avant (121), respectivement de la portion centrale (122), de manière à déboucher d'un côté dans le canal de sortie (126), respectivement le canal d'entrée (124), et de l'autre côté dans ledit au moins un canal de liaison avant (175), respectivement ledit au moins un canal de liaison arrière (195).

11. Rotor (10) selon la revendication 10, **caractérisé en ce que** l'arbre (12) comprend un corps principal (120) muni d'un trou borgne (128a, 128b) aligné selon l'axe (X) de l'arbre (12), ledit trou borgne (128) comprenant deux sections contiguës de diamètres internes différents, à savoir une première section (128a) possédant un premier diamètre interne et une deuxième section (128b) possédant un deuxième diamètre interne, et **en ce qu'**un insert (13) en matière plastique est logé à l'intérieur du trou borgne au niveau de la première section (128a), ledit insert (13) étant formé d'une partie tubulaire (131) alignée avec la deuxième section (128b) du trou borgne et possédant un diamètre interne qui est sensiblement égal au deuxième diamètre interne, et d'une partie annulaire (132) s'étendant radialement autour de l'une des extrémités de la partie tubulaire (131), ladite partie annulaire (132) étant positionnée au niveau de l'interface entre la première section (128a) et la deuxième section (128b) du trou borgne et possédant un diamètre externe qui est sensiblement égal au premier diamètre interne, le canal d'entrée (124) de l'arbre (12) étant défini conjointement par la partie tubulaire (131) de l'insert (13) et par la deuxième section (128b) du trou borgne et le canal de sortie (126) de l'arbre (12) correspondant à l'espace délimité par la première section (128a) du trou borgne et par les parties tubulaire et annulaire (131, 132) de l'insert (13).

12. Rotor (10) selon la revendication 11, **caractérisé en ce que** l'insert (13) comprend une ou plusieurs ailettes de séparation (133) s'étendant radialement depuis la périphérie externe de la partie tubulaire (131), chacune des ailettes de séparation (133) étant configurées pour séparer le canal de sortie (126) en deux ou plusieurs segments (126a-126d) de canaux de sortie.

13. Rotor (10) selon l'une des revendications précédentes, **caractérisé en ce que** chacun des flasques avant et arrière (17, 19) possède une face interne (173, 193) en contact avec une face latérale (143, 144) du paquet de tôles (14), ladite face interne (173, 193) étant munie d'au moins une rainure radiale (175, 195), ladite au moins une rainure radiale (175, 195) possédant une extrémité proximale (175c, 195c) débouchant sur une zone centrale (172) évidée dudit flasque, au niveau de laquelle ladite au moins une rainure radiale (175, 195) est en communication fluidique avec le canal d'entrée (124) ou de sortie (126) de l'arbre (12), et ladite au moins une rainure radiale (175, 195) étant alignée axialement avec l'un des aimants permanents (15) et possédant sensiblement la même forme générale que ledit aimant permanent (15) dans un plan perpendiculaire à l'axe, de sorte que ledit au moins un canal longitudinal (154) de circulation de fluide dudit aimant permanent (15) débouche, d'un côté, dans ladite au moins une rainure radiale (175) du flasque avant (17) et, de l'autre côté, dans ladite au moins une rainure radiale (195) du flasque arrière (19).

14. Rotor (10) selon la revendication 13, **caractérisé en ce qu'**au moins deux trous radiaux (125, 127) sont formés au travers de l'arbre (12), chacun desdits trous radiaux (125, 127) débouche, d'un côté, sur le canal d'entrée (124) ou de sortie (126) de l'arbre (12) et , de l'autre côté, sur la paroi périphérique de l'arbre (12), en étant en communication fluidique avec la zone centrale (172, 192) évidée du flasque avant (17) ou arrière (19).

15. Moteur électrique (30) comprenant un rotor (10) selon l'une des revendications précédentes.

## Patentansprüche

1. Rotor (10) für Elektromotor (30), umfassend:
- eine Rotorwelle (12), die um eine Achse (X) drehbar montiert ist;
- ein Blechpaket (14), das koaxial auf der Rotorwelle (12) montiert ist, wobei das Blechpaket (14) innere Hohlräume (141) umfasst, die in Bezug zur Achse (X) der Welle (12) und dazwischen symmetrisch sind, wobei die inneren Hohlräume (141) axial die Gesamtheit des Blechpakets (14) durchqueren, sodass sie an einem ihrer Enden in dem Bereich einer vorderen Seitenfläche (143) des Blechpakets (14) und an einem anderen ihrer Enden in dem Bereich einer hinteren Seitenfläche (144) des Blechpakets (14) münden;
- eine Vielzahl von Permanentmagneten (15), die in den inneren Hohlräumen (141) des Blechpakets (14) untergebracht sind;
- einen vorderen Flansch (17) und einen hinteren Flansch (19), die koaxial auf der Rotorwelle (12) montiert und axial beiderseits des Blechpakets (14) angeordnet sind, um jeweils an den vorderen und hinteren Seitenflächen (143, 144) des Blechpakets (14) anzuliegen;
wobei die Welle (12) mit mindestens einem ersten inneren Kanal (124) zur Zirkulation eines Kühlfluids, dem Einlasskanal, und mit mindestens einem zweiten inneren Kanal (126) zur Zirkulation eines Kühlfluids, dem Auslasskanal, versehen ist, und wobei der vordere Flansch (17), beziehungsweise der hintere Flansch (19) eingerichtet ist, um mit der vorderen Seitenfläche (143), beziehungsweise der hinteren Seitenfläche (144) des Blechpakets (14) mindestens einen vorderen Verbindungskanal (175), beziehungsweise mindestens einen hinteren Verbindungskanal (195) zu bilden, in dessen Inneren ein Kühlfluid zirkulieren kann, wobei der mindestens vordere (175), beziehungsweise hintere Verbindungskanal (195) in Fluidverbindung mit einem von dem Einlass- und Auslasskanal (124, 126) steht, und
wobei jeder Permanentmagnet (15) mit mindestens einem Fluidzirkulations-Längskanal (154) versehen ist, der einerseits in den mindestens einen vorderen Verbindungskanal (175) und andererseits in den mindestens einen hinteren Verbindungskanal (195) mündet, wobei der mindestens eine Fluidzirkulations-Längskanal (154) eingerichtet ist, um die Zirkulation eines Kühlfluids zu ermöglichen,
**dadurch gekennzeichnet, dass** jeder Permanentmagnet (15) durch Zusammensetzen von mindestens zwei Teilen, jeweils mindestens einem äußeren Teil (151) und mindestens einem inneren Teil (152), gebildet ist, wobei das mindestens eine innere Teil (152) in dem Inneren des mindestens einen äußeren Teils (151) untergebracht ist, und dadurch, dass der mindestens eine Fluidzirkulations-Längskanal (154) jeweils durch eine innere Umfangsoberfläche (151a) des mindestens einen äußeren Teils (151) und durch eine äußere Umfangsoberfläche (152a) des mindestens einen inneren Teils (152) begrenzt ist.

2. Rotor (10) nach Anspruch 1, **dadurch gekennzeichnet, dass** die innere Umfangsoberfläche (151a) des mindestens einen äußeren Teils (151) des mindestens einen der Permanentmagneten (15) mit Rippen (153) versehen ist, die mit der äußeren Umfangsoberfläche (152a) des mindestens einen inneren Teils (152) in Kontakt stehen.

3. Rotor (10) nach Anspruch 1 oder 2, **dadurch gekennzeichnet, dass** die äußere Umfangsoberfläche (152a) des mindestens einen inneren Teils (152) des mindestens einen der Permanentmagneten (15) mit Rippen versehen ist, die mit der inneren Umfangsoberfläche (151a) des mindestens einen äußeren Teils (151) in Kontakt stehen.

4. Rotor (10) nach einem der Ansprüche 1 bis 3, **dadurch gekennzeichnet, dass** für jeden Permanentmagneten (15) des einen von dem inneren (152) oder äußeren (151) Teil aus einer Matrix aus thermoplastischem Material gebildet ist, die Partikel einbezieht, die magnetische Eigenschaften besitzen, und der andere Teil durch Sintern, oder durch 3D-Druck, oder durch PIM-Verfahren von Partikeln, die magnetische Eigenschaften besitzen, erhalten wird.

5. Rotor (10) nach Anspruch 4, **dadurch gekennzeichnet, dass** die Partikel, die magnetische Eigenschaften besitzen, die zum Bilden des mindestens einen inneren und/oder äußeren Teils verwendet werden, aus einem Material bestehen, das aus Ferrit oder seltener Erde ausgewählt ist.

6. Rotor (10) nach Anspruch 4 oder 5, **dadurch gekennzeichnet, dass** die Matrix aus thermoplastischem Material aus einem Material besteht, das aus Polyamid 6 (PA 6), Polyamid 6-6 (PA 6-6), Polyamid 12 (PA 12) und Polyphenylensulfid (PPS) ausgewählt ist.

7. Rotor (10) nach einem der vorstehenden Ansprüche, **dadurch gekennzeichnet, dass** der mindestens eine vordere Verbindungskanal (175) mit dem Einlasskanal (124) in Fluidverbindung steht und der mindestens eine hintere Verbindungskanal (195) mit dem Auslasskanal (126) in Fluidverbindung steht, sodass ein zur Kühlung des Rotors bestimmtes Kühlfluid nacheinander durch den Fluideinlasskanal (124), danach zwischen dem vorderen Flansch (17) und der vorderen Seitenfläche (143) des Blechpakets (14) durch den mindestens einen vorderen Verbindungskanal (175) hindurch, danach in dem Inneren der Permanentmagneten (15) durch die Fluidzirkulations-Längskanäle (154), danach zwischen der hinteren Seitenfläche (144) des Blechpakets (14) und dem hinteren Flansch (19) durch den mindestens einen hinteren Verbindungskanal (195) und am Ende durch den Auslasskanal (126) in dem Rotor zirkulieren kann.

8. Rotor (10) nach Anspruch 7, **dadurch gekennzeichnet, dass** die Welle (12) einen hohlen vorderen Endabschnitt (121) und einen hohlen hinteren Endabschnitt (123) umfasst, der von dem vorderen Endabschnitt (121) durch einen zentralen vollen Abschnitt (122) getrennt ist, wobei der vordere Endabschnitt (121) beziehungsweise der hintere Endabschnitt (123) durch einen zentralen zylinderförmigen Hohlraum durchquert wird, wobei der zentrale Hohlraum den Einlasskanal (124), beziehungsweise den Auslasskanal (126), der Welle (12) bildet, und dadurch, dass mindestens ein Loch (125, 127), das in Bezug zur Achse (X) der Welle (12) radial ausgerichtet ist, in dem Inneren des vorderen Endabschnitts (121) beziehungsweise des hinteren Endabschnitts (123) gebildet ist, um einerseits in den Einlasskanal (124) beziehungsweise in den Auslasskanal (126) und andererseits in den mindestens einen vorderen Verbindungskanal (175) beziehungsweise den mindestens einen hinteren Verbindungskanal (195) zu münden.

9. Rotor (10) nach einem der Ansprüche 1 bis 6, **dadurch gekennzeichnet, dass** der mindestens eine hintere Verbindungskanal (195) mit dem Einlasskanal (124) in Fluidverbindung steht und der mindestens eine vordere Verbindungskanal (175) mit dem Auslasskanal (126) in Fluidverbindung steht, sodass ein zur Kühlung des Rotors bestimmtes Kühlfluid nacheinander durch den Einlasskanal (124), danach zwischen dem hinteren Flansch (19) und der hinteren Seitenfläche (144) des Blechpakets (14) durch den mindestens einen hinteren Verbindungskanal (195), danach in dem Inneren der Permanentmagnete (15) durch die Fluidzirkulations-Längskanäle (214), danach zwischen dem vorderen Flansch (17) und der vorderen Seitenfläche (143) durch den mindestens einen vorderen Verbindungskanal (175) und am Ende durch den Ausgangskanal (126) in dem Rotor zirkulieren kann.

10. Rotor (10) nach Anspruch 9, **dadurch gekennzeichnet, dass** die Welle (12) einen hohlen vorderen Endabschnitt (121) und einen vollen hinteren Endabschnitt (123) umfasst, der von dem vorderen Endabschnitt (121) durch einen hohlen zentralen Abschnitt (122) getrennt ist, wobei der vordere Endabschnitt (121) und der zentrale Abschnitt (122) durch einen zentralen zylinderförmigen Hohlraum durchquert werden, wobei der zentrale Hohlraum den Einlasskanal (124) der Welle (12) bildet, wobei der vordere Endabschnitt (121) auch von mindestens einem peripheren, koaxial mit dem zentralen Hohlraum fluchtenden Hohlraum durchquert wird, wobei der mindestens eine periphere Hohlraum den Auslasskanal (126), der Welle (12) bildet, und dadurch, dass mindestens ein Loch (125, 127) das in Bezug zur Achse (X) der Welle (12) radial ausgerichtet ist, in dem Inneren des vorderen Endabschnitts (121) beziehungsweise des zentralen Abschnitts (122) gebildet ist, um einerseits in den Auslasskanal (126) beziehungsweise den Einlasskanal (124) und andererseits in den mindestens einen vorderen Verbindungskanal (175) beziehungsweise in den mindestens einen hinteren Verbindungskanal (195) zu münden.

11. Rotor (10) nach Anspruch 10, **dadurch gekennzeichnet, dass** die Welle (12) einen Hauptkörper (120) umfasst, der mit einem in der Achse (X) der Welle (12) ausgerichteten Sackloch (128a, 128b) versehen ist, wobei das Sackloch (128) zwei zusammenhängende Abschnitte mit unterschiedlichen Innendurchmessern umfasst, nämlich einen ersten Abschnitt (128a), der einen ersten Innendurchmesser besitzt, und einen zweiten Abschnitt (128b), der einen zweiten Innendurchmesser besitzt, und dadurch, dass ein Einsatz (13) aus Kunststoffmaterial in dem Inneren des Sacklochs auf Höhe des ersten Abschnitts (128a) untergebracht ist, wobei der Einsatz (13) aus einem röhrenförmigen Teil (131) gebildet ist, der mit dem zweiten Abschnitt (128b) des Sacklochs ausgerichtet ist und einen Innendurchmesser besitzt, der in dem Wesentlichen gleich dem zweiten Innendurchmesser ist, und aus einem ringförmigen Teil (132), der sich radial um das eine der Enden des röhrenförmigen Teils (131) erstreckt, wobei der ringförmige Teil (132) in dem Bereich der Schnittstelle zwischen dem ersten Abschnitt (128a) und dem zweiten Abschnitt (128b) des Sacklochs positioniert ist und einen Außendurchmesser besitzt, der im Wesentlichen gleich dem ersten Innendurchmesser ist, wobei der Einlasskanal (124) der Welle (12) gemeinsam durch den röhrenförmigen Teil (131) des Einsatzes (13) und durch den zweiten Abschnitt (128b) des Sacklochs definiert ist, und der Auslasskanal (126) der Welle (12) dem durch den ersten Abschnitt (128a) des Sacklochs und durch die röhrenförmigen und ringförmigen Teile (131, 132) des Einsatzes (13) begrenzten Raum entspricht.

12. Rotor (10) nach Anspruch 11, **dadurch gekennzeichnet, dass** der Einsatz (13) einen oder mehrere Trennflügel (133) umfasst, die sich radial von dem äußeren Umfang des röhrenförmigen Teils (131) erstrecken, wobei jeder der Trennflügel (133) eingerichtet ist, um den Auslasskanal (126) in zwei oder mehrere Segmente (126a-126d) von Auslasskanälen zu trennen.

13. Rotor (10) nach einem der vorstehenden Ansprüche, **dadurch gekennzeichnet, dass** jeder der vorderen und hinteren Flansche (17, 19) eine Innenseite (173, 193) in Kontakt mit einer lateralen Seite (143, 144) des Blechpakets (14) besitzt, wobei die Innenseite (173, 193) mit mindestens einer radialen Nut (175, 195) versehen ist, wobei die mindestens eine radiale Nut (175, 195) ein proximales Ende (175c, 195c) besitzt, das in einen ausgehöhlten zentralen Bereich (172) des Flansches mündet, in Bereich dessen die mindestens eine radiale Nut (175, 195) in Fluidverbindung mit dem Einlass- (124) oder Auslasskanal (126) der Welle (12) steht, und die mindestens eine radiale Nut (175, 195) axial mit einem der Permanentmagneten (15) ausgerichtet ist und im Wesentlichen die gleiche allgemeine Form wie der Permanentmagnet (15) in einer Ebene senkrecht zur Achse besitzt, sodass der mindestens eine Fluidzirkulations-Längskanal (154) des Permanentmagneten (15) einerseits in die mindestens eine radiale Nut (175) des vorderen Flansches (17) und andererseits in die mindestens eine radiale Nut (195) des hinteren Flansches (19) mündet.

14. Rotor (10) nach Anspruch 13, **dadurch gekennzeichnet, dass** durch die Welle (12) hindurch mindestens zwei radiale Löcher (125, 127) gebildet sind, wobei jedes der radialen Löcher (125, 127) einerseits in den Einlass- (124) oder Ausgangskanal (126) der Welle (12), und andererseits, in die Umfangswand der Welle (12) mündet, wobei sie mit dem ausgehöhlten zentralen Bereich (172, 192) des vorderen (17) oder hinteren Flansches (19) in Fluidverbindung steht.

15. Elektromotor (30), der einen Rotor (10) nach einem der vorstehenden Ansprüche umfasst.

## Claims

1. A rotor (10) for an electric motor (30) comprising:
- a rotor shaft (12) rotatably mounted about an axis (X);
- a lamination stack (14) coaxially mounted on the rotor shaft (12), said lamination stack (14) comprising inner cavities (141) symmetrical with respect to the axis (X) of the shaft (12) and therebetween, said inner cavities (141) axially crossing the entirety of the lamination stack (14) such that they open, at one of their ends, at the level of a front lateral face (143) of said lamination stack (14) and, at another one of their ends, at the level of a rear lateral face (144) of said lamination stack (14);
- a plurality of permanent magnets (15) accommodated inside the inner cavities (141) of the lamination stack (14);
- a front flange (17) and a rear flange (19) coaxially mounted on the rotor shaft (12) and arranged axially on either side of the lamination stack (14) so as to be contiguous respectively with the front and rear lateral faces (143, 144) of the lamination stack (14);
wherein the shaft (12) is provided with at least one first inner channel (124) for the circulation of a cooling fluid, so-called the inlet channel, and at least one second inner channel (126) for the circulation of a cooling fluid, so-called the outlet channel, and wherein the front flange (17), respectively the rear flange (19), is configured to form with the front lateral face (143), respectively the rear lateral face (144), of the lamination stack (14) at least one front connecting channel (175), respectively at least one rear connecting channel (195), inside which a cooling fluid can flow, said at least one front (175), respectively rear (195), connecting channel being in fluid communication with one of said inlet and outlet channels (124, 126), and
wherein each permanent magnet (15) is provided with at least one longitudinal fluid circulation channel (154) opening, on one side, onto said at least one front connecting channel (175), and, on the other side, onto the at least one rear connecting channel (195), said at least one longitudinal fluid circulation channel (154) being configured to enable the circulation of a cooling fluid,
**characterized in that** each permanent magnet (15) is formed by the assembly of at least two portions, respectively at least one outer portion (151) and at least one inner portion (152), said at least one inner portion (152) being accommodated inside said at least one outer portion (151), and **in that** said at least one longitudinal fluid circulation channel (154) is delimited respectively by an inner peripheral surface (151a) of said at least one outer portion (151) and by an outer peripheral surface (152a) of said at least one inner portion (152).

2. The rotor (10) according to claim 1, **characterized in that** the inner peripheral surface (151a) of said at least one outer portion (151) of at least one of the permanent magnets (15) is provided with ribs (153) which are in contact with the outer peripheral surface (152a) of said at least one inner portion (152).

3. The rotor (10) according to claim 1 or 2, **characterized in that** the outer peripheral surface (152a) of said at least one inner portion (152) of at least one of the permanent magnets (15) is provided with ribs which are in contact with the inner peripheral surface (151a) of said at least one outer portion (151).

4. The rotor (10) according to one of claims 1 to 3, **characterized in that**, for each permanent magnet (15), one of said inner (152) or outer (151) portions is formed of a matrix made of a thermoplastic material incorporating particles having magnetic properties and the other portion is obtained by sintering, or by 3D printing, or by a PIM process of particles having magnetic properties.

5. The rotor (10) according to claim 4, **characterized in that** the particles having magnetic properties used for the formation of said at least one inner and/or outer portion are made of a material selected from among ferrite or a rare-earth element.

6. The rotor (10) according to claim 4 or 5, **characterized in that** the matrix made of a thermoplastic material is made of a material selected from among polyamide 6 (PA 6), polyamide 6-6 (PA 6-6), polyamide 12 (PA 12), and polyphenylene sulfide (PPS).

7. The rotor (10) according to one of the preceding claims, **characterized in that** said at least one front connecting channel (175) is in fluid communication with said inlet channel (124) and said at least one rear connecting channel (195) is in fluid communication with said outlet channel (126), such that a cooling fluid intended for cooling the rotor could flow in the rotor successively throughout the inlet channel (124), then between the front flange (17) and the front lateral face (143) of the lamination stack (14) throughout said at least one front connecting channel (175), then inside the permanent magnets (15) throughout said longitudinal fluid circulation channels (154), then between the rear lateral face (144) of the lamination stack (14) and the rear flange (19) throughout said at least one rear connecting channel (195), and finally throughout the outlet channel (126).

8. The rotor (10) according to claim 7, **characterized in that** the shaft (12) comprises a hollow front end portion (121) and a hollow rear end portion (123) separated from the front end portion (121) by a solid central portion (122), the front end portion (121), respectively the rear end portion (123), being crossed by a cylindrical shaped central cavity, said central cavity forming the inlet channel (124), respectively the outlet channel (126), of the shaft (12), and **in that** at least one hole (125, 127) oriented radially with respect to the axis (X) of the shaft (12) is formed inside the front end portion (121), respectively the rear end portion (123), so as to open on one side into the inlet channel (124), respectively the outlet channel (126), and on the other side into said at least one front connecting channel (175), respectively said at least one rear connecting channel (195).

9. The rotor (10) according to one of claims 1 to 6, **characterized in that** said at least one rear connecting channel (195) is in fluid communication with said inlet channel (124) and said at least one front connecting channel (175) is in fluid communication with said outlet channel (126), such that a cooling fluid intended for cooling the rotor could flow in the rotor successively throughout the inlet channel (124), then between the rear flange (19) and the rear lateral face (144) of the lamination stack (14) throughout said at least one rear connecting channel (195), then inside the permanent magnets (15) throughout said longitudinal fluid circulation channels (214), then between the front flange (17) and the front lateral face (143) throughout said at least one front connecting channel (175), and finally throughout the outlet channel (126).

10. The rotor (10) according to claim 9, **characterized in that** the shaft (12) comprises a hollow front end portion (121) and a solid rear end portion (123) separated from the front end portion (121) by a hollow central portion (122), the front end portion (121) and the central portion (122) being crossed by a cylindrical shaped central cavity, said central cavity forming the inlet channel (124) of the shaft (12), the front end portion (121) also being crossed by at least one peripheral cavity coaxially aligned with the central cavity, said at least one peripheral cavity forming the outlet channel (126) of the shaft (12), and **in that** at least one hole (125, 127) oriented radially with respect to the axis (X) of the shaft (12) is formed inside the front end portion (121), respectively the central portion (122), so as to open on one side into the outlet channel (126), respectively the inlet channel (124), and on the other side into said at least one front connecting channel (175), respectively said at least one rear connecting channel (195).

11. The rotor (10) according to claim 10, **characterized in that** the shaft (12) comprises a main body (120) provided with a blind hole (128a, 128b) aligned according to the axis (X) of the shaft (12), said blind hole (128) comprising two contiguous sections of different inner diameters, namely a first section (128a) having a first inner diameter and a second section (128b) having a second inner diameter, and **in that** an insert (13) made of a plastic material is accommodated inside the blind hole at the level of the first section (128a), said insert (13) being formed of a tubular portion (131) aligned with the second section (128b) of the blind hole and having an inner diameter that is substantially equal to the second inner diameter, and an annular portion (132) extending radially around one of the ends of the tubular portion (131), said annular portion (132) being positioned at the level of the interface between the first section (128a) and the second section (128b) of the blind hole and having an outer diameter that is substantially equal to the first inner diameter, the inlet channel (124) of the shaft (12) being defined jointly by the tubular portion (131) of the insert (13) and by the second section (128b) of the blind hole and the outlet channel (126) of the shaft (12) corresponding to the space delimited by the first section (128a) of the blind hole and by the tubular and annular portions (131, 132) of the insert (13).

12. The rotor (10) according to claim 11, **characterized in that** the insert (13) comprises one or several splitter fin(s) (133) extending radially from the outer periphery of the tubular portion (131), each of the splitter fins (133) being configured to separate the outlet channel (126) into two or more outlet channel segment(s) (126a-126d).

13. The rotor (10) according to one of the preceding claims, **characterized in that** each of the front and rear flanges (17, 19) has an inner face (173, 193) in contact with a lateral face (143, 144) of the lamination stack (14), said inner face (173, 193) being provided with at least one radial groove (175, 195), said at least one radial groove (175, 195) having a proximal end (175c, 195c) opening onto a recessed central area (172) of said flange, at the level of which said at least one radial groove (175, 195) is in fluid communication with the inlet (124) or outlet (126) channel of the shaft (12), and said at least one radial groove (175, 195) being axially aligned with one of the permanent magnets (15) and having substantially the same general shape as said permanent magnet (15) in a plane perpendicular to the axis, so that said at least one longitudinal fluid circulation channel (154) of said permanent magnet (15) opens, on one side, into said at least one radial groove (175) of the front flange (17) and, on the other side, into said at least one radial groove (195) of the rear flange (19).

14. The rotor (10) according to claim 13, **characterized in that** at least two radial holes (125, 127) are formed throughout the shaft (12), each of said radial holes (125, 127) opens, on one side, onto the inlet (124) or outlet (126) channel of the shaft (12) and, on the other side, onto the peripheral wall of the shaft (12), while being in fluid communication with the recessed central area (172, 192) of the front (17) or rear (19) flange.

15. An electric motor (30) comprising a rotor (10) according to one of the preceding claims.
